# EUROPÄISCHE PATENTSCHRIFT

(11) **EP 3 129 759 B1**
(45) Veröffentlichungstag und Bekanntmachung des Hinweises auf die Patenterteilung: **18.07.2018**
(21) Anmeldenummer: 15715980.7
(22) Anmeldetag: 28.03.2015
(51) Int. Cl.: G01H 9/00, G01S 7/40, G01S 13/86, G01S 13/88, G01S 13/50

(54) **VORRICHTUNG ZUR SCHWINGUNGSFREQUENZMESSUNG EINES GESPANNTEN ANTRIEBSRIEMENS UND VERFAHREN ZUR DURCHFÜHRUNG DER SCHWINGUNGSFREQUENZMESSUNG**
DEVICE FOR MEASURING THE FREQUENCY OF VIBRATIONS ON A TIGHT DRIVE BELT, AND METHOD FOR PERFORMING THE VIBRATION FREQUENCY MEASUREMENT
DISPOSITIF POUR LA MESURE DE LA FRÉQUENCE D'OSCILLATION D'UNE COURROIE DE TRANSMISSION TENDUE ET PROCÉDÉ POUR L'EXÉCUTION DE LA MESURE DE FRÉQUENCE D'OSCILLATION

(30) Priorität: 08.04.2014 DE 102014005107
(43) Veröffentlichungstag der Anmeldung: 15.02.2017
(73) Patentinhaber: Hartmann, Jürgen, 88138 Sigmarszell (DE)
(72) Erfinder: KUHN, Jochen, 83080 Oberaudorf (DE)
(74) Vertreter: Riebling, Peter
(86) Internationale Anmeldenummer: PCT/EP2015/000668
(87) Internationale Veröffentlichungsnummer: WO 2015/154857

(56) Entgegenhaltungen:
- EP-A1- 0 316 888
- DE-A1- 4 235 072
- GB-A- 2 310 099
- JP-A- 2014 052 280
- US-A1- 2003 058 158
- US-A1- 2012 031 187

## Beschreibung

Die Erfindung betrifft eine Vorrichtung zur Schwingungsfrequenzmessung eines gespannten Antriebsriemens und ein Verfahren zum Betrieb der Vorrichtung und zur Durchführung der Schwingungsfrequenzmessung. Schwingungsfrequenzmessungen an gespannten Antriebsriemen sind bekannt. Beispielsweise schlägt die GB 2 310 099 A vor, ein sogenanntes Dopplerradar zu verwenden, der mit einer Sendeantenne einen Mikrowellenstrahl gegen eine vibrierende Oberfläche sendet und mit einer Empfangsantenne das Signal empfängt und nach dem Doppler-Prinzip auswertet.

Nachteil dieser bekannten Schwingungsmessung mithilfe eines Dopplerradars ist jedoch, dass eine Bewegung des handgeführten Messkopfes während der Durchführung der Vibrationsmessung nicht in das Messergebnis einbezogen wird. Daher ist eine solche Messung fehlerbehaftet und nicht genau genug, wenn der Messkopf während der Messung bewegt wird.
Der gleiche Nachteil gilt auch für die DE 197 28 653 A1, die ein CW-Doppler-Radar-Modul verwendet, wobei das Modul ein Mikrowellenstrahler und ein Empfänger ist, der im Wellenlängenbereich von einigen Zentimetern bis wenigen Millimetern arbeitet.
Auch hier besteht das Problem, dass die handbedingte Bewegung des Messkopfes während der Durchführung der Messung an gespannten Antriebsriemen nicht berücksichtigt wird.

US2003058158 offenbart einen handgeführten Schwingungsfrequenzmesser mit einem Doppler-Radar-Modul enthaltend einen Beschleunigungssensor, um die Messung des Doppler-Radar-Moduls zu korrigieren. Diese Vorrichtung ist aber nicht zur Schwingungsfrequenzmessung eines Antriebsriemens und berücksichtigt nicht die handbedingte Bewegung des Messkopfes sondern den Neigungswinkel der Messanordnung gegenüber der Wasseroberfläche. Der Erfindung liegt deshalb die Aufgabe zugrunde, einen Schwingungssensor für die Schwingungsmessung an gespannten Antriebsriemen der eingangs genannten Art so weiterzubilden, dass auch eine handgeführte Messung des Schwingungssensors nicht zu fehlerhaften Messergebnissen führt.

Ferner liegt der Erfindung die Aufgabe zugrunde, ein Verfahren zur Auswertung der Signale des Schwingungssensors vorzuschlagen, bei dem eine wesentlich genauere Auswertung der vom Schwingungssensor erfassten Signale möglich ist.
Zur Lösung der gestellten Aufgabe ist ein Schwingungssensor nach der Erfindung durch die technische Lehre des Anspruches 1 gekennzeichnet.
Ein Verfahren zur Auswertung der Signale des Schwingungssensors ist durch die Merkmale des unabhängigen Anspruches 6 gekennzeichnet.
Wesentliches Merkmal des Schwingungssensors nach der Erfindung ist, dass in dem Schwingungssensor, der handgeführt ist, neben einem Doppler-Radar-Modul noch zusätzlich ein Beschleunigungssensor angeordnet ist, und dass die Signale des Doppler-Radars mit denen des Beschleunigungssensors dadurch im Sinne eines Ausschlusses miteinander verrechnet werden, dass wenn während ein Puls des Dopplerradars erkannt wird und gleichzeitig ein Puls des Beschleunigungssensors erkannt wird, der Puls des Dopplerradars als Fehlimpuls verworfen wird. Nach der technischen Lehre des unabhängigen Anspruches 6 ist das Verfahren zur Auswertung der Signale eines Schwingungssensors dadurch gekennzeichnet, dass aus dem Analogpegel des Doppler-Radar-Moduls durch Verwendung einer Schaltschwelle digitale, zeitlich zueinander versetzte Pulse abgeleitet werden, deren gegenseitiger Abstand ein Maß für die Zeit der eintreffenden Impulse ist, und hieraus die Frequenz des schwingenden Antriebsriementrums abgeleitet werden kann.
Sollte während der Messung eine Bewegung mit definierter Amplitude und definierter Geschwindigkeit durch den Beschleunigungssensor erkannt werden, wird der Puls des Doppler-Radarsensors verworfen, weil damit erkennbar ist, dass der handgeführte Schwingungssensor während der Messung kurzfristig bewegt wurde. Die Bewegung wird demnach durch den Beschleunigungssensor erfasst, und der daraus abgeleitete Puls des Beschleunigungssensors wird dergestalt bei der Ermittlung der digitalen Doppler-Radarpulse verwendet, dass während der Beschleunigungsphase erzeugte Doppler-Radarimpulse verworfen werden.

Ein solches Verfahren, bei dem die Doppler-Radarimpulse mit den Pulsen des Beschleunigungssensors verglichen werden, ist bisher noch nicht bekannt gewesen. Es kommt hierdurch zu einer bisher unbekannten Genauigkeit und Sicherheit bei der Auswertung einer Schwingungsmessung an einem schwingenden Antriebsriemen, wobei der Schwingungssensor handgeführt ist.

Die genannten Ergebnisse der Messung am Beschleunigungssensor werden demnach miteinander verrechnet und zur Bewertung der Doppler-Radarpulse verwendet.

Somit ist vorgesehen, dass im Schwingungssensor neben dem Doppler-Radar-Modul noch zusätzlich ein Beschleunigungssensor angeordnet ist, dessen Signale mit den Signalen des Doppler-Radar-Moduls im Sinne eines Signalausschlusses verrechenbar sind.

Nach einem weiteren Merkmal der Erfindung ist eine optische Positionierhilfe für die handgeführte Positionierung des Schwingungssensors über der schwingenden Oberfläche des Riemens vorgesehen. Hierzu ist vorgesehen, dass an der Unterseite des Gehäuses, im hinteren Bereich des Gehäuses, dort wo etwa das Kabel in das Gehäuse hineinführt, zwei im Abstand voneinander angeordnete LEDs angeordnet sind, die schräg nach unten und vorne gegen die Oberfläche des zu erfassenden Riemens zwei sich in der Oberfläche des Riemens schneidende Lichtstrahlen projizieren.

Die beiden LEDs erzeugen demnach jeweils einen Lichtstrahl, und die beiden Lichtstrahlen überdecken sich an der Oberfläche des zu erfassenden Riemens dann, wenn der richtige Abstand zwischen dem Meßkopf und dem Riemen mit der Hand eingestellt wurde.. Zur Verfeinerung der optischen Positionierhilfe ist vorgesehen, dass die beiden LEDs in den projizierten Lichtstrahlen noch zusätzlich zentrisch in den Lichtstrahlen projizierte, kleinere Markierungspunkte erzeugen.

Es ist dann die richtige Entfernung zwischen der Bodenseite des Schwingungssensors und der Oberfläche des Riemens erreicht, wenn sich die beiden schräg auf die Oberfläche des Riemens zentrisch in den Lichtstrahlen projizierten Markierungspunkte auf der Riemenoberfläche gegenseitig decken.

Eine solche Überdeckung ist beispielsweise beim Abstand der Unterseite des Meßkopfes von 40 mm über der Oberfläche des Riemens gegeben. Mit dieser optischen Positionierhilfe wird der Vorteil erreicht, dass stets eine gleichbleibende Entfernung zu der zu messenden Oberfläche des Riemens erreicht wird, was vorher bisher nicht der Fall war.

Die Erfindung verzichtet bewusst auf eine berührungslose Messung des Abstandes, wie sie auch mit einem (Ultraschall- oder lichtoptischen) Abstandssensor möglich wäre, weil die optische Positionierhilfe zur handgeführten Distanzeinstellung keinen erhöhten Schaltungsaufwand benötigt und sehr betriebssicher arbeitet.

Damit kann die optimale Entfernung immer gleichbleibend durch Halten des Schwingungssensors in der Hand beibehalten werden und während der ganzen Messung auch optisch kontrolliert werden.

Die Richtung der von den LEDs erzeugten Lichtstrahlen ist so gerichtet, dass sich die Überdeckung der Lichtstrahlen und damit die Einstellung des optimalen Messabstandes direkt unter dem Messfeld des Messkopfes an der Unterseite des Schwingungssensors ergeben.

Damit wird sichergestellt, dass genau das vom Messsensor erzeugte Messfeld einen richtigen und gleichbleibenden Abstand zu der zu erfassenden Oberfläche des Riemens bildet.

In einer Weiterbildung der Erfindung ist vorgesehen, dass an der Unterseite des Gehäuses des Schwingungssensors eine gehäuseseitige Positionsmarkierung angebracht ist, die optisch erkennen lässt, in welchem Bereich an der Unterseite des Gehäuses des Schwingungssensors der Messkopf des Dopplerradars angeordnet ist.

Diese gehäuseseitige, optisch wahrnehmbare Positionsmarkierung fluchtet mit dem innenseitig im Gehäuse angeordneten Messkopf und die erfindungsgemäße optische Positionierhilfe mit den zwei LEDs und den zwei sich kreuzenden Lichtstrahlen in der Messebene fluchtet dann genau im Bereich des vom Messkopf auf die Riemenoberfläche ausgestrahlten Messfeldes.

Damit werden mit der erfindungsgemäßen optischen Positionierhilfe die Position und der Abstand des Messkopfes über dem Messfeld eingestellt.

Weil die beiden Lichtstrahlen der LEDs schräg nach vorne in Richtung auf den vorne und mittig angeordneten Meßkopf gegen die Oberfläche des Riemens gerichtet sind, wird damit sicher gestellt, dass auch die horizontale Neigung des Gehäuses des Schwingungssensors parallel zur Oberfläche des Riemens ausgerichtet ist, wenn sich bei richtiger Distanz des Meßkopfes zur Oberfläche des Riemens die beiden Lichtstrahlen auf einer vertikalen Linie direkt unter dem Messkopf auf der Riemenoberfläche vereinigen.

In einer Weiterbildung der vorliegenden Erfindung ist es vorgesehen, dass der Schwingungssensor des Dopplerradars-Moduls mit dem Beschleunigungssensor einen räumlich vereinigten, einzigen Messkopf bildet, d. h. die beiden Sensoren sind in einem einzigen etwa punkt oder kreisförmigen Messpunkt vereinigt.

Wichtig ist, dass der Beschleunigungssensor allein, ohne Verwendung des Doppler-Radar-Moduls, als Messsensor für tiefe Frequenzen genutzt wird. Dies bedeutet, dass unter einer Schwingungsfrequenz von 6 Hertz der Schwingungssensor nunmehr nicht in einer bestimmten Entfernung vom Messobjekt (Oberfläche des Riemens) gehalten wird und hierbei eine berührungslose Messung zur Oberfläche des schwingenden Riemens erfolgt, sondern stattdessen wird der Schwingungssensor direkt mechanisch mit der Oberfläche des Riemens gekoppelt. Hierzu dient eine Federklammer oder ein anderes geeignetes mechanisches Koppelglied.

Das Gehäuse des Schwingungssensors wird mit einer (mechanischen) Klammer an die Riemenoberfläche angeklammert. Der Riemen wird mit einem geeigneten Instrument angeschwungen, z. B. er wird mit der Hand gezupft oder mit einem geeigneten Werkzeug angeschlagen und der Beschleunigungssensor misst nun die Schwingung des Riemens direkt über die mechanische Kopplung zwischen dem Schwingungssensor und der mechanischen Kopplung mit dem Riemen, ohne dass das Doppler-Radarmodulausgewertet wird.

Das Doppler-Radarmodul ist demnach abgeschaltet, wenn der Schwingungssensor direkt mechanisch mit dem Riemen gekoppelt wird und eine direkte mechanische Kopplung des Schwingungssensors mit dem Riemen mit einer Frequenz von unter 6 Hertz erfolgt.

Solche Schwingungsfrequenzen an Riemen, die unter 6 Hertz liegen, sind vor allem bei sehr langen und schweren Riemen, insbesondere Keilriemen zu erwarten und um die Messung für derartig schwere und lange Riemen zu verbessern, ist eine direkte mechanische Kopplung zwischen dem Schwingungssensor und dem Riemen vorgesehen. Die Schwingungsmessung erfolgt dann nur noch über den Beschleunigungssensor, das Doppler-Radarmodul ist bei einer direkten mechanischen Kopplung des Schwingungssensors mit dem Riemen abgeschaltet.

Die Erfindung ist nicht auf die Erfassung der Frequenz eines Keilriemens beschränkt. Es können beliebige Riemen verwendet werden, insbesondere Antriebsriemen für den Antrieb von beliebigen Maschinen und Objekten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisiert dargestellte Anordnung eines handgeführten Schwingungssensors zur Schwingungsmessung an einem gespannten Antriebsriemen
Figur 2: die Darstellung des Messkopfes und des Messgerätes als Blockschaltbild
Figur 3: der digitale Pegel des Beschleunigungssensors bei Erzeugung eines Störeinflusses

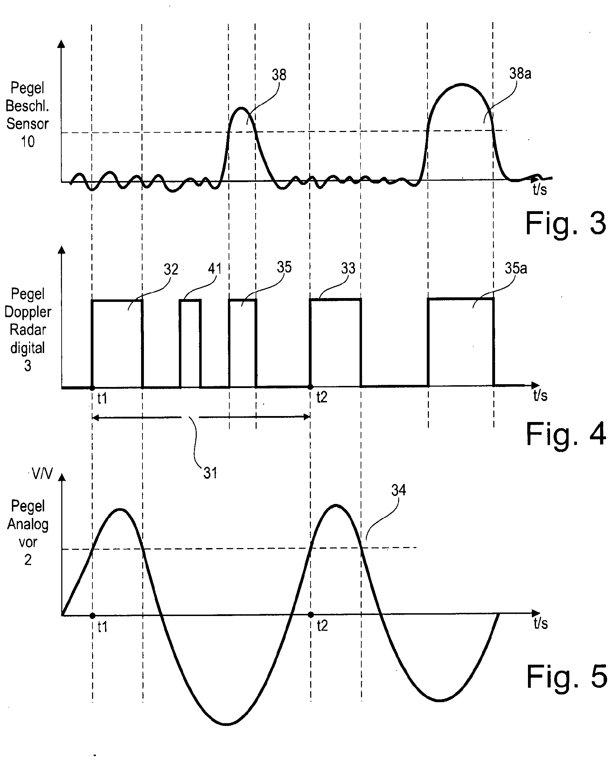

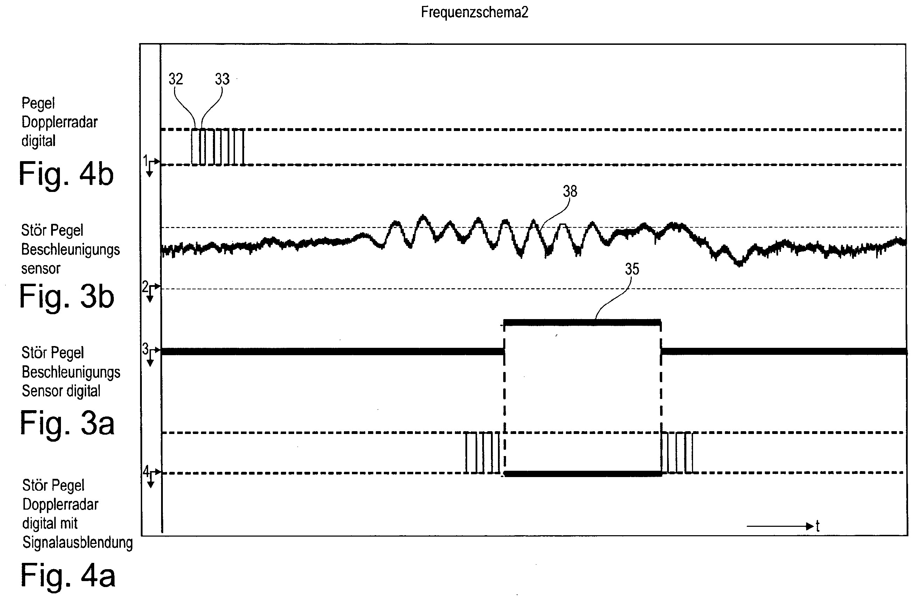

Figur 3 a: Störpegel des Beschleunigungssensors - digital
Figur 3 b: Störpegel des Beschleunigungssensors - analog

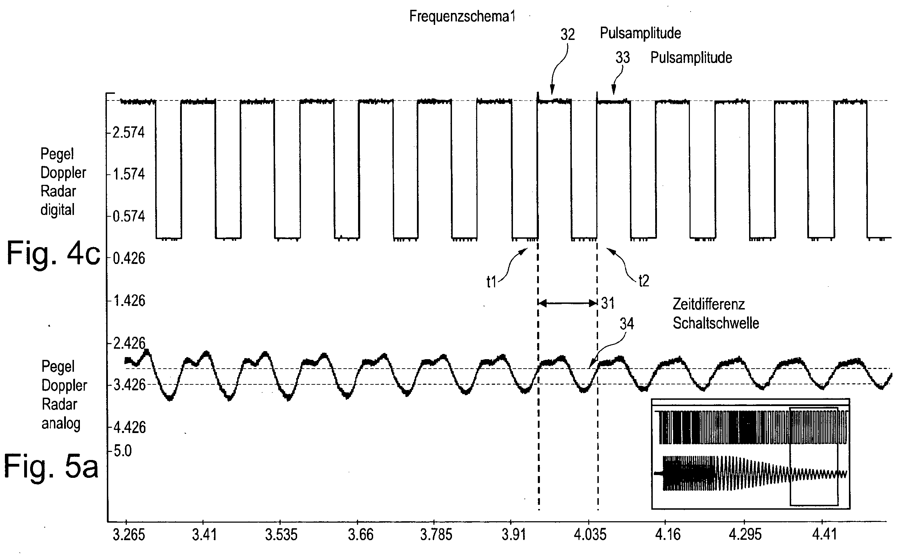

Figur 4: das digitale Signal des Doppler-Radar-Moduls
Figur 4a: digitales Signal des Dopplerradars mit Signalausblendung im Frequenzschema 2
Figur 4b: Pegel des Dopplerradar digital im Frequenzschema 2
Figur 4 c: Pegel des Dopplerradar im Frequenzschema 1
Figur 5: der analoge Pegel des Doppler-Radar-Moduls
Figur 5 a: Pegel des Dopplerradar - analog - im Frequenzschema 1

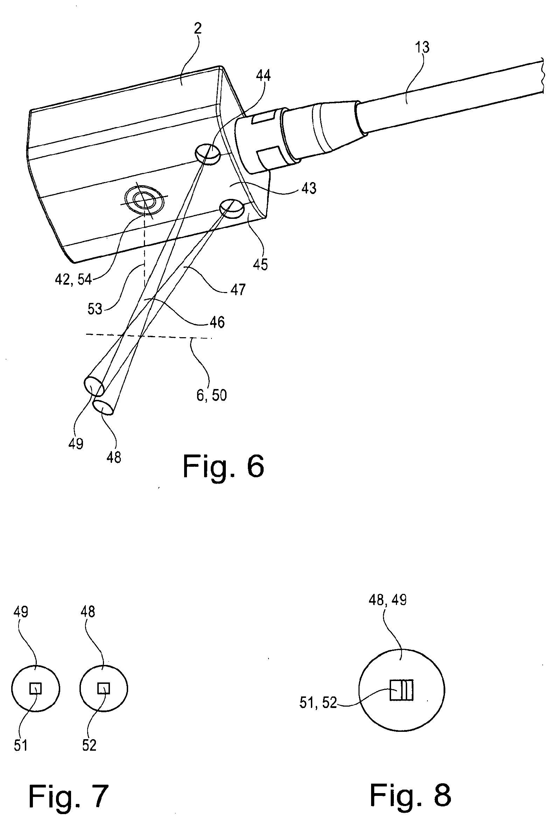

Figur 6: zeigt die perspektivische Unteransicht eines Schwingungssensors mit eingebauter optischer Positionierhilfe
Figur 7: schematisiert die beiden von den LEDs erzeugten Lichtstrahlen der Positionierhilfe
Figur 8: die gleiche Darstellung wie Figur 7, wenn sich die beiden Lichtstrahlen der LEDs auf der Messebene schneiden und somit der richtige Abstand zu der Messebene hergestellt ist

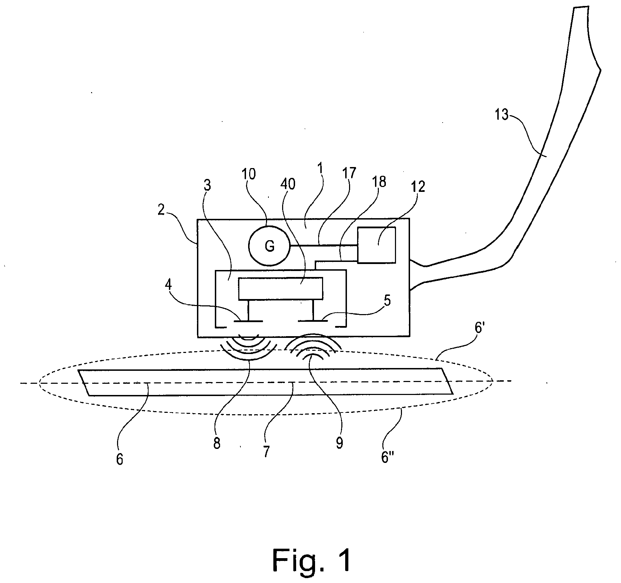

In Figur 1 ist allgemein ein Schwingungssensor 1 dargestellt, der in einem Gehäuse 2 angeordnet ist. Das Gehäuse hat etwa Abmessungen von 50 x 35 x 15 mm. Es wird mit seiner einen Flachseite in gegenüberliegende Stellung zu einem stehenden Riemen 6 gebracht, der durch eine Mittenachse durch die Längsrichtung 7 gekennzeichnet ist.

Zur Schwingungsmessung wird der Riemen 6 mit der Hand gespannt und losgelassen, sodass er zwischen den Stellungen 6' und 6" schwingt.

Während dieser Zeit wird das Gehäuse 2 des Schwingungssensors 1 mit der Hand in einem bestimmten Abstand von dem schwingenden Rahmen 6 gehalten, ohne dass der Riemen 6' an die Seitenwand des Gehäuses 2 anschlägt.

Während dieser Messzeit ist es nun möglich, dass unerwünschte Schwingungen durch Bewegung des Schwingungssensors erzeugt werden oder dass das Gehäuse 2 verkantet wird oder dass es versehentlich von dem Riemen 6 wegbewegt oder verschoben wird. Zu diesem Zweck sieht die Erfindung vor, dass im Gehäuse 2 des Schwingungssensors 1 neben dem Doppler-Radar-Modul 3 noch ein Beschleunigungssensor 10 angeordnet ist.

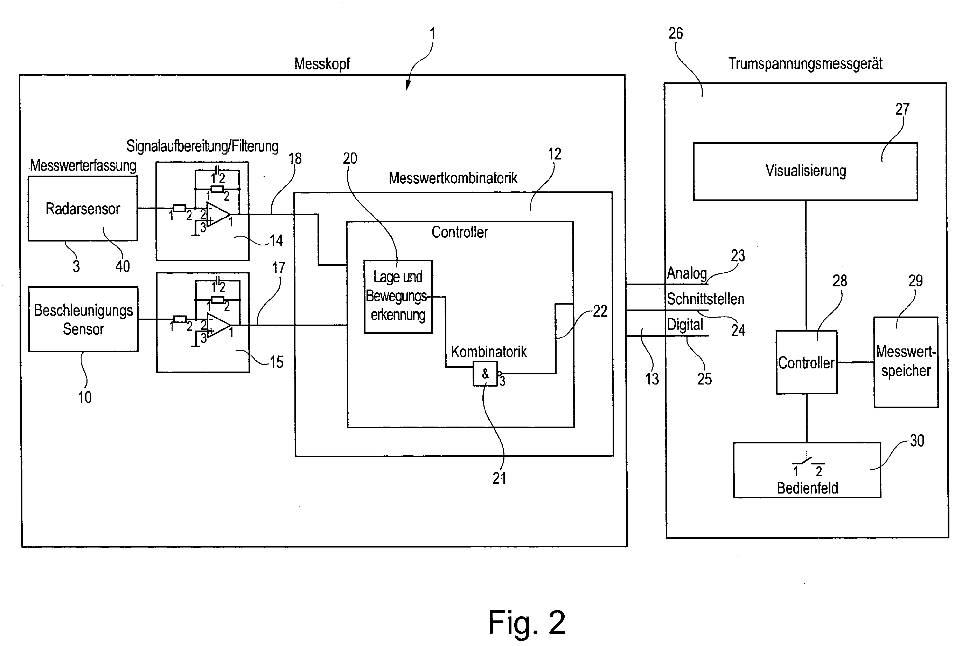

Das Doppler-Radar-Modul 3 arbeitet in an sich bekannter Weise mit einer Sendeantenne 4, die im Mikrowellenbereich einen Sendestrahl 8 gegen den schwingenden Riemen 6 ausstrahlt und mithilfe einer Empfangsantenne 5 den Empfangsstrahl 9 empfängt und nach dem Doppler-Radar-Prinzip auswertet. Zu diesem Zweck sind im Gehäuse des Doppler-Radar-Moduls 3 noch ein Auswertemodul 40 angeordnet, welches die beiden Strahlen 8, 9 der Antennen 4, 5 nach dem Dopplerprinzip auswertet. Das Ausgangssignal wird über eine Verstärkereinheit 14, der ein Filter zugeordnet ist, über eine Leitung 18 einem Mikroprozessor 12 zugeführt (siehe Figur 2).

Im Gehäuse 2 des Schwingungssensors 1 ist der Beschleunigungssensor 10 angeordnet, dessen Signal über eine Verstärkereinheit 15 und eine Filterschaltung über die Leitung 17 dem Mikroprozessor 12 zugeführt wird.

Der Mikroprozessor 12 hat ein Softwaremodul 20 zur Lagen- und Bewegungserkennung des Schwingungssensors 1 integriert. Die Besonderheiten dieses Softwaremodul 20 werden anhand der späteren Zeichnungen noch erläutert werden.

Die verschiedenen Auswertungen des Mikroprozessors 12 werden über das Signalkabel 13 einem Messgerät 26 zugeführt. Die Zuführung der Signale erfolgt bevorzugt in digitaler Form, nämlich einerseits über einen Schnittstellenbus 24 und andererseits - oder auch wahlweise - über ein oder mehrere digitale Leitungen 25.

Zusätzlich können noch ein oder mehrere Analogleitungen 23 vorgesehen sein.

Wichtig ist, dass im Mikroprozessor 12 auch noch eine Rechenschaltung 21 vorhanden ist, die nach den späteren Zeichnungen der Figuren 3 bis 6 eine Bewertung der Lagen- und Bewegungserkennung des Schwingungssensors 1 durchführt.

Der Ausgang 22 ist also ein Signalbus, der als Signalkabel 13 dem Messgerät 26 zugeführt wird.

Das Messgerät 26 (Trum-Spannungs-Messgerät) besteht im Wesentlichen aus einem Controller 28, dem ein Messwertspeicher 29 zugeordnet ist. Der Controller wird von einem Bedienfeld 30 angesteuert, und die erfassten Messwerte werden auf einer digitalen Anzeige 27 angezeigt.

Es wird noch hinzugefügt, dass im Gehäuse 2 des Schwingungssensors 1 noch eine berührungslose Temperaturmessung angeordnet sein kann, die die Temperatur des Riemens 6 erfasst, um einen durch Temperaturanstieg erschlafften Riemen von einem kühlen Riemen zu unterscheiden. Auch ein solches berührungslos erfasstes Temperatursignal wird dem Mikroprozessor 12 eingespeist.

Die Figuren 3 bis 5 zeigen nun die verschiedenen Bewertungen, sodass nach der Erfindung eine besonders störungsfreie Auswertung des Doppler-Radar-Signals erfolgen kann.

In Figur 5 ist zunächst dargestellt, dass der analoge Pegel des Doppler-Radars als analoge Schwingungskurve dargestellt werden kann, und hierbei wird eine Schaltschwelle 34 definiert, bei deren Überschreitung ein digitaler Impuls erzeugt wird, wie er in Figur 4 dargestellt ist.

Wenn also zu den Zeitpunkten t1 und t2 jeweils die Schaltschwelle 34 überschritten wird, wird hieraus ein digitaler Puls mit einer Pulsamplitude 32 und 33 geformt.

Der Abstand zwischen den beiden Zeiten t1 und t2 ist als Zeitdifferenz 31 definiert und gibt die Frequenz des schwingenden Riemens an. Somit ist die Frequenz: f = 1/ Zeitdifferenz 31.

Kommt es nun während der Schwingungsmessung zu einer ungewollten Bewegung des Messkopfes, dann erzeugt der Beschleunigungssensor 10 ein analoges Signal, welches als Signal 38, in Figur 3 dargestellt ist.

Wenn nun bei der Auswertung der Kurve nach Figur 4 festgestellt wird, dass zum Zeitpunkt der Erzeugung eines Pulses 38, des Beschleunigungssensors 10 gleichzeitig auch ein Puls 35, des Dopplerradars erzeugt wird, wird dieser als Fehlimpuls 35, des Dopplerradars verworfen.

Die Messung der Zeit 31 ist mit der ansteigenden oder abfallenden Flanke zur Zeit t1 des Pulses 32 und ebenfalls mit der ansteigenden oder abfallenden Flanke zur Zeit t2 des Pulses 33 definiert.

Wichtig bei dem erfindungsgemäßen Verfahren ist demnach einerseits die Gewichtung der Messergebnisse des Doppler-Radar-Moduls in Abhängigkeit vom Beschleunigungssignal, und ferner wird noch als wesentlich beansprucht, dass zusätzlich eine Beurteilung der Schwingungsmessung in Abhängigkeit von der Temperatur des Riemens stattfindet.

Ferner ist bei dem Verfahren wichtig, dass eine Gewichtung auch in Bezug auf die erfassten Pegel des Beschleunigungssensors stattfindet. Eine ungewollte Beschleunigung des handgeführten Schwingungssensors über einen bestimmten Beschleunigungswert hinaus führt dazu, dass das in diesem Zeitraum erzeugte Doppler-Radarsignal nicht ausgewertet wird.

Die Figur 6 zeigt eine optische Positionierhilfe 43 zur richtigen Abstandseinstellung des Gehäuses 2 des Schwingungssensors 1 über einer Messebene, die durch die Oberfläche des Riemens 6 gebildet wird. Gleichzeitig zeigt die Figur 6 eine am Gehäuse angebrachte mit dem Auge erkennbare Positionsmarkierung 42, die dem Benutzer an der Unterseite des Gehäuses 2 optisch erkennbar machen soll, dass an dieser Stelle der Messkopf 54 im Gehäuse 2 eingebaut ist.

Die optische Positionierhilfe 43 besteht aus zwei einen gegenseitigen Abstand zueinander einnehmenden LEDs 44, 45, von denen jede LED 44, 45 einen Lichtstrahl 46, 47 erzeugt, der auf die Oberfläche des Riemens 6 projiziert wird.

In jedem Lichtstrahl 46, 47 werden noch zusätzliche zentrische Markierungspunkte 48, 49 auf die Oberfläche des Riemens 6 projiziert.

Die Figur 7 zeigt die nicht korrekte Entfernung von der Unterseite des Gehäuses 2 zu der Messebene, nämlich dann, wenn die beiden Lichtstrahlen 46, 47 sich nicht auf der Oberfläche des Riemens 6 decken und ebenso wenig die dort angeordneten Leuchtmarkierungen 51, 52.

Die beiden Lichtstrahlen 46, 47 bilden demnach für den Benutzer optisch erkennbare Markierungspunkte 48, 49 auf der Messebene, z. B. der Oberfläche des zu erfassenden Riemens 6 und entsprechen der Farbe der LED leuchtet ein solcher Markierungspunkt z. B. rot oder in einer anderen beliebigen Farbe auf der Oberfläche auf.

Im Zentrumsbereich der auf die Messebene projizierten Markierungspunkte 48, 49 sind die kleineren Leuchtmarkierungen 51, 52 angeordnet, die stärker als das Umfeld der Markierungspunkte 48, 49 leuchten und jede beliebige Symbolform annehmen können, wie z. B. ein Dreieck, ein Viereck oder dergleichen mehr.

Wenn nun die exakte Entfernung gemäß Figur 6 zwischen der Unterseite des Messkopfes 54 im Gehäuse 2 und der Oberfläche des zu erfassenden Riemens 6 mit der Hand eingestellt wurde, gibt es eine Deckungsebene 50, in der sich die beiden Lichtstrahlen 46, 47 gemäß Figur 8 überlagern und die beiden Leuchtmarkierungen 51, 52 sich zueinander vereinigen. Die Deckungsebene 50 ist identisch mit der Oberfläche des Riemens 6.

Sobald sich also die beiden Lichtstrahlen und die zentrisch darin angeordneten Leuchtmarkierungen gemäß Figur 8 auf der Riemenoberfläche zu einem einzigen Leuchtsymbol vereinigen ist gemäß Figur 6 die richtige Entfernung des Messkopfes 54 zur Riemenoberfläche erreicht.

Die beiden Lichtstrahlen 46, 47 sind schräg nach vorne gerichtet, so dass sich deren Deckungsebene 50 im Bereich des Messfeldes 53 des Messkopfes 54 auf einer vertikalen Linie schneidet. Auf diese Weise wird stets dafür gesorgt, dass die optische Entfernungsmessung mit Hilfe der optischen Positionierhilfe 43 stattfindet genau im Messfeld 53, 54 des Meßkopfes 54 stattfindet und eine Verkantung und unzulässige Neigung des Gehäuses 2 des Schwingungssensors 1 wird zuverlässig erkannt.

Wird ein Signal des Bewegungssensors erkannt, werden die beiden LEDs der Positionserkennung abgeschaltet. Dadurch wird optisch eine unzulässige Bewegung signalisiert.

Die Figur 5a zeigt den analogen Pegel des Dopplerradarsignals.

Im rechten Fenster unten in der Zeichnung nach Figur 5a ist der vollständige Schwingungsverlauf eines Riemenanschlages in analoger (untere Kurve) und digitaler (obere Kurve) Form dargestellt. Die untere Kurve im kleinen Fenster entspricht der Figur 5a vergrößert, und zwar als Ausschnitt aus dem Fenster der kleinen Abbildung und die darüber liegende Darstellung ist die digitalisierte Form dieses Pegels entsprechend der Figur 4c.

Beide Figurenverläufe im kleinen Fenster der Abbildung rechts unten sind in Figur 4c und Figur 5a übereinander liegend dargestellt.

Mit gestrichelten Linien ist in Figur 5a die Schaltschwelle eingezeichnet und als Beispiel für eine solche Schaltschwelle ist ein Abstand zwischen dem Zeitpunkt t1 und t2 dargestellt.

Mit dem horizontalen Pfeil ist der zeitliche Abstand zwischen den beiden Zeiten t1 und t2 dargestellt.

Der sich hieraus ergebende Zeitabstand ist mit dem Bezugzeichen 31 bezeichnet. Die Schaltschwelle oben ist mit dem Bezugszeichen 34 versehen.

Aus Figur 4c ergibt sich nun das aus Figur 5a ermittelte digitale Dopplerradarsignal, wobei mit dem Bezugszeichen 32, 33 die Pulsamplitude dargestellt ist.

Aus der Zeitdifferenz 31 wird somit die Frequenz des Dopplerradarsignals errechnet.

Im Prinzip entspricht die Darstellung in den Figuren 4c und 5a der Ableitung, die anhand der Figuren 3 und 4 dargestellt wurde.

In den Figuren 4b, 3b, Figur 3a und Figur 4a ist ein Frequenzschema 2 dargestellt.

Die Figur 4b zeigt das digitale Dopplerradarsignal entsprechend der Darstellung in Figur 4c, jedoch in einem engeren Darstellungsabstand, wobei zwei Pulsamplituden 32, 33 nebeneinander liegend dargestellt sind.

In das digitale Dopplerradarsignal nach Figur 4b ist nun der Störpegel nach Figur 3b eines Beschleunigungssensors eingeblendet.

Der vollständige Störpegel ist in Figur 3b mit 38 bezeichnet.

In der darunter stehenden Figur 3a ist der gleiche Störpegel wie in Figur 3b in digitalisierter Form dargestellt, und es ist erkennbar, dass wenn der Störpegel nach dem Puls 38 einen gewissen Wert in drei Raumachsen überschreitet, ein digitales Störpegelsignal entsprechend dem Fehlimpuls 35 in Figur 3a erzeugt wird.

Sobald der digitale Störpegel nach Figur 3a entsprechend dem Fehlpuls 35 vorliegt, wird entsprechend der Figur 4a das oben in Figur 4b gezeigte digitale Dopplerradarsignal ausgeblendet. Es wird demnach nicht zur Auswertung herangezogen.

Damit ergibt sich der Vorteil, dass der Beschleunigungssensor einen Störpegel erzeugt, der digitalisiert wird und weil der Beschleunigungssensor in der Regel nur langsame Handbewegungen bei der Führung des Sensors erfasst, kommt es immer zu einer Erzeugung eines vollständigen Fensters gemäß Figur 4a. Die Fensterlänge des Fehlimpulses 35 in Figur 3a führt demnach zu einer Ausblendung des Pegels des Dopplerradars, z. B. in einem Zeitraum von 200 ms.

Hieraus ergibt sich, dass wegen dieser Ausblendung eine Erfassung des Signals nicht beeinträchtigt wird, weil die Ausblendungszeit sehr kurz ist und die Genauigkeit der Messung nicht beeinträchtigt.

### Zeichnungslegende

- 1: Schwingungssensor
- 2: Gehäuse
- 3: Doppler-Radar-Modul
- 4: Sendeantenne
- 5: Empfangsantenne
- 6: Riemen 6', 6"
- 7: Längsachse
- 8: Sendestrahl
- 9: Empfangsstrahl
- 10: Beschleunigungssensor
- 11:
- 12: Mikroprozessor
- 13: Signalkabel
- 14: Verstärkereinheit
- 15: Verstärkereinheit
- 16: Verstärkereinheit
- 17: Leitung (von 10)
- 18: Leitung (von 3)
- 19:
- 20: Modul
- 21: Rechenschaltung
- 22: Ausgang
- 23: Analogleitung
- 24: Schnittstellenbus
- 25: Digitalleitung
- 26: Messgerät
- 27: Anzeige
- 28: Controller
- 29: Messwertspeicher
- 30: Bedienfeld
- 31: Zeitdifferenz
- 32: Pulsamplitude 1
- 33: Pulsamplitude 2
- 34: Schaltschwelle
- 35: digitaler Ausgangspuls Beschleunigungsensor
- 38: analoges Signal Beschleunigungsensor 38 (von 10)
- 40: Auswertemodul
- 42: Positionsmarkierung
- 43: optische Positionierhilfe
- 44: LED 1
- 45: LED 2
- 46: Lichtstrahl 1
- 47: Lichtstrahl 2
- 48: Markierungspunkt 1
- 49: Markierungspunkt 2
- 50: Deckungsebene
- 51: Leuchtmarkierung 1
- 52: Leuchtmarkierung 2
- 53: Messfeld
- 54: Messkopf

## Patentansprüche

1. Vorrichtung (1) zur handgeführten Schwingungsfrequenzmessung eines gespannten Antriebsriemens (6, 6', 6") mit einem Doppler-Radar-Modul (3), das mit einer Sendeantenne (4) einen Sendestrahl (8) gegen eine in Schwingung versetzte Oberfläche des Antriebsriemens (6, 6', 6") sendet und mit einer Empfangsantenne (5) den von der Oberfläche reflektierten Empfangsstrahl (9) empfängt und nach dem Doppler-Prinzip auswertet, **dadurch gekennzeichnet, dass** im Schwingungssensor (1) neben dem Doppler-Radar-Modul (3) noch zusätzlich ein Beschleunigungssensor (10) angeordnet ist, dessen Signale mit den Signalen des Doppler-Radar-Moduls (3) dadurch im Sinne eines Signalausschlusses verrechenbar sind, dass wenn während ein Puls (35) des Dopplerradars erkannt wird und gleichzeitig ein Puls (38) des Beschleunigungssensors (10) erkannt wird, der Puls des Dopplerradars als Fehlimpuls (35) verworfen wird.

2. Vorrichtung nach Anspruch 1, **dadurch gekennzeichnet, dass** im Gehäuse (2) des Schwingungssensors (1) der Beschleunigungssensor (10) angeordnet ist, dessen Signal über eine Verstärkereinheit (15) und eine Filterschaltung über die Leitung (17) einem Mikroprozessor (12) zuführbar ist, welcher das Signal des Dopplerradars mit dem Signal des Beschleunigungssensors (10) im Sinne eines Signalausschlusses kombiniert.

3. Vorrichtung nach Anspruch 1 oder 2, **dadurch gekennzeichnet, dass** eine optische Positionierhilfe (43) für die handgeführte Positionierung des Schwingungssensors (1) über der schwingenden Oberfläche eines Riemens (6) an der Unterseite des Gehäuses (2) des Schwingungssensors (1) angeordnet ist.

4. Vorrichtung nach Anspruch 3, **dadurch gekennzeichnet, dass** die optische Positionierhilfe (43) aus zwei im Abstand voneinander im Gehäuse (2) angeordneten LEDs (44, 45) besteht, die jeweils einen schräg nach unten und vorne gegen die Oberfläche des zu erfassenden Riemens (6) gerichteten Lichtstrahl (46, 47) erzeugen.

5. Vorrichtung nach Anspruch 4, **dadurch gekennzeichnet, dass** zusammen mit den Lichtstrahlen (46, 47) der beiden LED's (44,45) zu diesen Lichtstrahlen (46, 47) zentrische Markierungspunkte (48, 49) auf die Oberfläche des Riemens (6) projizierbar sind.

6. Verfahren zum Betrieb einer handgeführten Vorrichtung zur Durchführung einer Schwingungsfrequenzmessung eines gespannten und zur Schwingung angeregten Antriebsriemens (6, 6', 6") mit einem Doppler-Radar-Modul (3), das mit einer Sendeantenne (4) einen Sendestrahl (8) gegen eine zur Schwingung angeregte Oberfläche des Antriebsriemens (6, 6', 6") sendet und mit einer Empfangsantenne (5) den von der Oberfläche reflektierten Empfangsstrahl (9) empfängt und nach dem Doppler-Prinzip auswertet, wobei
aus einem Analogpegel des Doppler-Radar-Moduls (3) durch Verwendung einer Schaltschwelle digitale, zeitlich zueinander versetzte Pulse (32, 33, 35, 35a) abgeleitet werden, deren gegenseitiger zeitlicher Abstand (31) ein Maß für die Zeit der aufeinandertreffenden Impulse ist, und hieraus die Frequenz des schwingenden Antriebsriemens (6, 6', 6") abgeleitet wird, sofern nicht von einem Beschleunigungssensor (10) ein Pegel erzeugt wird, der mit einem der Pulse (32, 33, 35, 35a) des Doppler-Radar-Moduls (3) zusammenfällt und somit der Puls (32, 33, 35, 35a) des Doppler-Radarsensors verworfen wird, weil der handgeführte Schwingungssensor (1) während der Messung kurzfristig bewegt wurde.

7. Verfahren nach mindestens einem der Ansprüche 6, **dadurch gekennzeichnet, dass** bei riemenseitigen Schwingungsfrequenzen unter einer Schwelle von 6 Hertz das Doppler-Radar-Modul (3) abgeschaltet wird und die riemenseitige Schwingungsfrequenz nur noch über die Auswertung der Signale des Beschleunigungssensors (10) erfolgt, wenn dieser direkt mechanisch mit dem Riemen (6) verbunden wird.

8. Verfahren nach mindestens einem der Ansprüche 6 bis 7 **dadurch gekennzeichnet, dass** eine optische Positionierhilfe (43) für die handgeführte Positionierung des Schwingungssensors (1) über der schwingenden Oberfläche des Riemens (6) vorgesehen ist.

9. Verfahren nach Anspruch 8, **dadurch gekennzeichnet, dass** die optische Positionierhilfe (43) aus zwei an der Unterseite des Gehäuses (2) angeordneten LEDs besteht, die jeweils einen Lichtstrahl (46., 47) auf die Oberfläche des Riemens (6) projizieren, und die beiden Lichtstrahlen (46, 47) sich dann an der Oberfläche des zu erfassenden Riemens überdecken, wenn der richtige Abstand zwischen einer Positionsmarkierung (42) an der Unterseite des Gehäuses (2) und dem Riemen (6) mit der Hand eingestellt wurde

## Claims

1. Device (1) for hand-operated vibration frequency measurement of a taut drive belt (6, 6', 6") using a Doppler radar module (3) which transmits using a transmitting antenna (4) a transmit beam (8) against a vibrated surface of the drive belt (6, 6', 6") and receives using a receiving antenna (5) the receive beam (9) reflected from the surface and evaluates it according to the Doppler principle, **characterised in that** in the vibration sensor (1) in addition to the Doppler radar module (3), is also arranged additionally an acceleration sensor (10), the signals of which can be offset against the signals of the Doppler radar module (3) in the sense of signal exclusion **in that** if while a pulse (35) of the Doppler radar is detected and at the same time a pulse (38) of the acceleration sensor (10) is detected, the pulse of the Doppler radar is rejected as an error impulse (35).

2. Device according to claim 1, **characterised in that** in the housing (2) of the vibration sensor (1) is arranged the acceleration sensor (10), the signal of which can be supplied via an amplifier unit (15) and a filter circuit via the cable (17) to a microprocessor (12), which combines the signal of the Doppler radar with the signal of the acceleration sensor (10) in the sense of signal exclusion.

3. Device according to claim 1 or 2, **characterised in that** an optical positioning aid (43) for the hand-operated positioning of the vibration sensor (1) is arranged above the vibrating surface of a belt (6) on the underside of the housing (2) of the vibration sensor (1).

4. Device according to claim 3, **characterised in that** the optical positioning aid (43) consists of two LEDs (44, 45) arranged at a distance from one another in the housing (2) and which in each case generate a light beam (46, 47) directed at an angle downwards and at the front against the surface of the belt (6) to be registered.

5. Device according to claim 4, **characterised in that** together with the light beams (46, 47) of the two LEDs (44, 45), marking points (48, 49) which are central to these light beams (46, 47) can be projected onto the surface of the belt (6).

6. Method for operating a hand-operated device for carrying out a vibration frequency measurement of a taut and vibrated drive belt (6, 6', 6") using a Doppler radar module (3) which transmits using a transmitting antenna (4) a transmit beam (8) against a vibrated surface of the drive belt (6, 6', 6") and receives using a receiving antenna (5) the receive beam (9) reflected from the surface and evaluates it according to the Doppler principle, wherein digital pulses (32, 33, 35, 35a) offset chronologically with respect to one another, the mutual chronological distance (31) of which is a measure of the time of the impulses meeting one another, are derived from an analogue level of the Doppler radar module (3) by using a switching threshold, and the frequency of the vibrating drive belt (6, 6', 6") is derived therefrom provided a level is not generated by an acceleration sensor (10) which coincides with one of the pulses (32, 33, 35, 35a) of the Doppler radar module (3) and hence the pulse (32, 33, 35, 35a) of the Doppler radar sensor is rejected because the hand-operated vibration sensor (1) has been moved briefly during the measurement.

7. Method according to claim 6, **characterised in that** for belt-side vibration frequencies below a threshold of 6 Hertz, the Doppler radar module (3) is switched off and the belt-side vibration frequency is still only effected via evaluation of the signals of the acceleration sensor (10) if the latter is directly connected mechanically to the belt (6).

8. Method according to at least one of claims 6 to 7, **characterised in that** an optical positioning aid (43) is provided for hand-operated positioning of the vibration sensor (1) above the vibrating surface of the belt (6).

9. Method according to claim 8, **characterised in that** the optical positioning aid (43) consists of two LEDs arranged on the underside of the housing (2) and which respectively project a light beam (46, 47) onto the surface of the belt (6), and the two light beams (46, 47) then overlap on the surface of the belt to be registered if the correct distance between a position marking (42) on the underside of the housing (2) and the belt (6) has been set by hand.

## Revendications

1. Dispositif (1) pour une mesure manuelle de fréquence d'oscillation d'une courroie de transmission (6, 6', 6") tendue, avec un module radar Doppler (3) qui, avec une antenne émettrice (4), émet un faisceau d'émission (8) vers une surface mise en vibration de la courroie de transmission (6, 6', 6") et qui, avec une antenne de réception (5), reçoit le faisceau de réception (9) réfléchi par la surface, et l'analyse selon le principe Doppler,
**caractérisé en ce qu'**il est également prévu dans le capteur d'oscillations (1), en plus du module radar Doppler (3), un capteur d'accélération (10) dont les signaux sont aptes à être pris en compte avec les signaux du module radar Doppler (3) dans le sens d'une exclusion de signaux grâce au fait que si, pendant qu'une impulsion (34) du radar Doppler est détectée et qu'en même temps une impulsion (38) du capteur d'accélération (10) est détectée, l'impulsion du radar Doppler est rejetée comme impulsion erronée (35).

2. Dispositif selon la revendication 1, **caractérisé en ce que** c'est dans le boîtier (2) du capteur d'oscillations (1) qu'est disposé le capteur d'accélération (10), dont le signal est apte à être amené par l'intermédiaire d'une unité d'amplification (15) et d'un circuit filtrant par l'intermédiaire de la ligne (17) jusqu'à un microprocesseur (12) qui combine le signal du radar Doppler avec le signal du capteur d'accélération (10) dans le sens d'une exclusion de signal.

3. Dispositif selon la revendication 1 ou 2,
**caractérisé en ce qu'**un élément auxiliaire optique de positionnement (43) pour le positionnement manuel du capteur d'oscillations (1) au-dessus de la surface vibrante d'une courroie (6) est disposé sur le côté inférieur du boîtier (2) du capteur d'oscillations (1).

4. Dispositif selon la revendication 3, **caractérisé en ce que** l'élément auxiliaire optique de positionnement (43) se compose de deux LED (44, 45) espacées qui sont disposées dans le boîtier (2) et qui produisent chacune un faisceau lumineux (46, 47) dirigé en biais vers le bas et vers l'avant en direction de la surface de la courroie (6) à détecter.

5. Dispositif selon la revendication 4, **caractérisé en ce que** conjointement avec les faisceaux lumineux (46, 47) des deux LED (44, 46), des points de repère (48, 49) centrés sur ces faisceaux lumineux (46, 47) sont aptes à être projetés sur la surface de la courroie (6).

6. Procédé pour faire fonctionner un dispositif tenu à la main pour réaliser une mesure de fréquence d'oscillation d'une courroie de transmission (6, 6', 6") tendu et mise en vibration, avec un module radar Doppler (3) qui, avec une antenne émettrice (4), émet un faisceau d'émission (8) vers une surface mise en vibration de la courroie de transmission (6, 6', 6") et qui, avec une antenne de réception (5), reçoit le faisceau de réception (9) réfléchi par la surface, et l'analyse selon le principe Doppler,
selon lequel à partir d'un niveau analogique du module radar Doppler (3) grâce à l'utilisation d'un seuil de commutation sont déduites des impulsions numériques (32, 33, 35, 35a) décalées dans le temps dont l'écart temporel mutuel (31) donne une mesure de la durée des impulsions successives, et de là est déduite la fréquence de la courroie d'entraînement vibrante (6, 6', 6"), dans la mesure où un capteur d'accélération (10) ne produit pas un niveau qui coïncide avec l'une des impulsions (32, 33, 35, 35a) du module radar Doppler (3) et où l'impulsion (32, 33, 35, 35a) du capteur radar Doppler n'est donc pas rejetée parce que le capteur d'oscillations (1) tenu à la main a été brièvement déplacé pendant la mesure.

7. Procédé selon la revendication 6, **caractérisé en ce qu'**en présence de fréquences d'oscillation, côté courroie, situées au-dessous d'un seuil de 6 Hertz, le module radar Doppler est arrêté et la mesure de la fréquence d'oscillation ne se fait plus que par l'analyse des signaux du capteur d'accélération (10) si celui-ci est relié directement mécaniquement à la courroie (6).

8. Procédé selon l'une des revendications 6 à 7,
**caractérisé en ce qu'**il est prévu un élément auxiliaire optique de positionnement (43) pour le positionnement manuel du capteur d'oscillations (1) au-dessus de la surface vibrante de la courroie (6).

9. Procédé selon la revendication 8, **caractérisé en ce que** l'élément auxiliaire optique de positionnement (43) se compose de deux LED qui sont disposées sur le côté inférieur du boîtier (2) et qui projettent chacune un faisceau lumineux (46, 47) sur la surface de la courroie (6), et les deux faisceaux lumineux (46, 47) se recouvrent sur la surface de la courroie à détecter lorsque la bonne distance entre le repère de position (42) sur le côté inférieur du boîtier (52) et la courroie (6) a été réglé à la main.
